# EUROPÄISCHE PATENTSCHRIFT

(11) **EP 1 018 207 B1**
(45) Veröffentlichungstag und Bekanntmachung des Hinweises auf die Patenterteilung: **12.11.2003**
(21) Anmeldenummer: 98951275.1
(22) Anmeldetag: 08.09.1998
(51) Int. Cl.: H02M 3/02, H02M 3/22, H02M 3/156

(54) **GETAKTETES STROMVERSORGUNGSGERÄT MIT ANLAUFSCHALTUNG**
SWITCHED-MODE POWER SUPPLY DEVICE WITH A STARTING CIRCUIT
APPAREIL D'ALIMENTATION EN COURANT A FONCTIONNEMENT CADENCE COMPORTANT UN CIRCUIT DE MISE EN MARCHE

(30) Priorität: 24.09.1997 DE 19742184
(43) Veröffentlichungstag der Anmeldung: 12.07.2000
(73) Patentinhaber: Infineon Technologies AG, 81669 München (DE)
(72) Erfinder: NIEDERREITER, Hans, D-84453 Mühldorf (DE)
(74) Vertreter: Patentanwälte Westphal, Mussgnug & Partner
(86) Internationale Anmeldenummer: DE9802650
(87) Internationale Veröffentlichungsnummer: WO99016166

(56) Entgegenhaltungen:
- EP-A1- 0 744 819
- US-A- 5 083 254
- US-A- 5 200 886
- US-A- 5 452 195

## Beschreibung

Die Erfindung bezieht sich auf getaktete Stromversorgungsgeräte mit Anlaufschaltung mit ersten Anschlüssen zum Zuführen einer Eingangsspannung, einer Wandlerinduktivität und einer Steuervorrichtung, die in einen aktiven und einen inaktiven Zustand überführbar ist, zum getakteten Anlegen der Eingangsspannung an die Wandlerinduktivität während des aktiven Zustands der Steuervorrichtung.

Getaktete Stromversorgungsgeräte zeichnen sich durch einen hohen Wirkungsgrad und geringe Schwankungen der üblicherweise gleichgerichteten Ausgangsspannung aus. Ihnen liegt das Wirkungsprinzip zugrunde, daß eine Induktivität abwechselnd Energie, die beispielsweise aus einem Stromnetz stammt, speichert und geregelt wieder abgibt. Die Aufnahme von Energie erfolgt nur zu bestimmten Zeiten. Sogenannte Schaltregler überwachen den Vorgang und sorgen für eine möglichst konstante Ausgangsgleichspannung.
Zu den getakteten Stromversorgungsgeräten zählen insbesondere die Schaltnetzteile, die die Netzspannung auf eine benötigte Betriebsspannung herabsetzen, sowie Durchflußwandler und Sperrwandler.

Die Betriebsspannung des Schaltreglers liegt in der Regel unter der Spannung, mit der das Stromversorgungsgerät versorgt wird. Bei Schaltnetzteilen ist diese Spannung die Netzspannung. Die Schaltregler arbeiten dagegen mit einigen wenigen Volt. Während des Normalbetriebs, also wenn mit der Ausgangsspannung des Stromversorgungsgerätes eine Last betrieben wird, kann die Betriebsspannung des Schaltreglers aus dieser Ausgangsspannung gewonnen werden. Der Normalbetrieb kann aber nur dann einsetzen, wenn der Schaltregler arbeitet. Solange die Betriebsspannung noch nicht aus der Ausgangsspannung zur Verfügung gestellt werden kann, übernehmen Anlaufschaltungen das Anlaufen der Schaltregler.

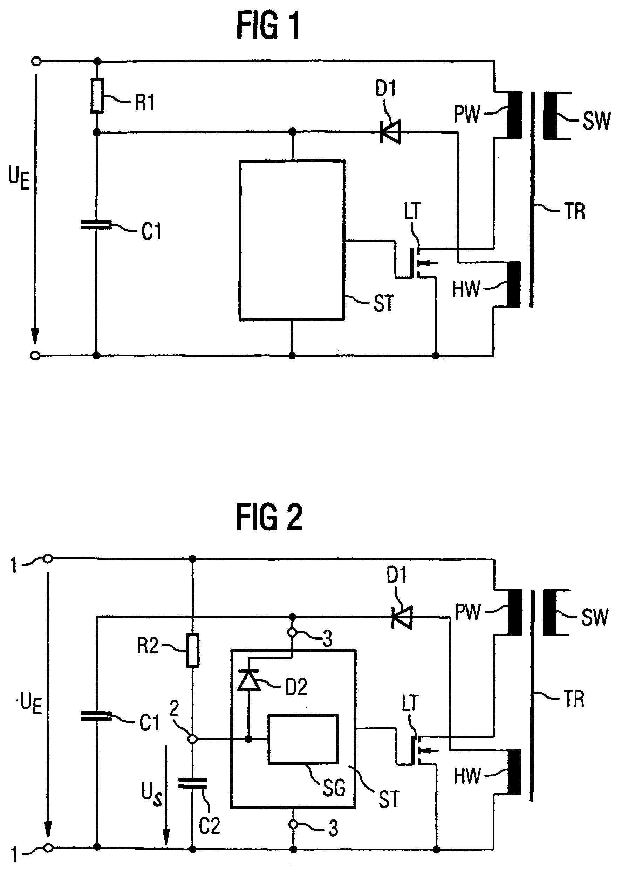

In Figur 1 ist ein Beispiel für eine Eingangsschaltung eines Schaltnetzteils mit Anlaufschaltung angegeben. Die Anlaufschaltung enthält eine Serienschaltung aus einem Widerstand R1 und einer Anlaufkapazität C1 sowie eine Steuervorrichtung ST. Zu dieser Eingangsschaltung gehören auch ein Leistungstransistor LT, der mit einem Transformator TR verbunden ist. Er weist auf der Primärseite eine Hilfswicklung HW auf, die mit einer Hilfsdiode D1 verbunden ist, und eine Primärwicklung PW. An einer Sekundärwicklung SW auf der Sekundärseite des Transformators TR kann eine Last, gegebenenfalls nach vorheriger Gleichrichtung und Filterung, betrieben werden. Die Primärwicklung PW bildet mit der Drain-Source-Strecke des Leistungstransistors LT eine Serienschaltung, die mit einer Eingangsspannung U_{E} verbunden ist. An ihr ist auch die Serienschaltung aus dem Widerstand R1 und der Anlaufkapazität C1 angeschlossen. Die Eingangsspannung U_{E} kann beispielsweise die gleichgerichtete Netzspannung sein. Die Anlaufkapazität C1 ist mit der Steuervorrichtung ST und einer Serienschaltung aus der Hilfswicklung HW und einer Hilfsdiode D1 parallel geschaltet.
Die Steuervorrichtung ST enthält den Schaltregler. Sie kann noch weitere Schaltkreise zum Beispiel zur Strombegrenzung aufweisen.

Der Leistungstransistor LT wird von der Steuervorrichtung ST so angesteuert, daß der Strom durch die Primärwicklung PW zerhackt wird. Dadurch wird der magnetische Fluß durch die Primärwicklung geändert und eine Spannung in der Sekundärwicklung induziert. Aufgrund der elektromagnetischen Kopplung wird auch in der Hilfswicklung HW eine Spannung induziert. Im Normalbetrieb des Schaltnetzteils wird die Steuervorrichtung ST von der Spannung der Hilfswicklung HW versorgt. Diese Spannung kann aber erst beim Schalten des Transistors LT in der Hilfswicklung induziert werden. Zum Schalten muß aber der Steuervorrichtung ST, die den Transistor LT ansteuert, Energie zur Verfügung gestellt werden. Diese Energie liefert die eigens dafür vorgesehene Anlaufkapazität C1. Die Hilfsdiode D1 sorgt dafür, daß sich die Anlaufkapazität C1 nicht über die Hilfswicklung HW entlädt, sondern über die Steuervorrichtung ST.

Die Anlaufkapazität C1 wird in der Regel von der Eingangsspannung UE über den Widerstand R1 geladen. Die Spannungsfestigkeit und Leistungsfähigkeit des Widerstandes R1 werden von der Höhe der Eingangsspannung UE und dem Stromverbrauch der Steuervorrichtung ST bestimmt.

Die US 5,200,886 beschreibt ein getaktetes Stromversorgungsgeräte mit einer Steuervorrichtung zur getakteten Ansteuerung eines in Reihe zu einer Primärspule eines Transformators geschalteten Transistors, wobei die Steuerschaltung Versorgungsspannungsklemmen aufweist, die an eine Hilfswicklung des Transformators gekoppelt sind, um während der getakteten Ansteuerung des Transistors die Spannungsversorgung der Steuerschaltung über die Hilfswicklung zu gewährleisten. Die Schaltungsanordnung umfasst weiterhin eine Anlaufschaltung für die Steuerschaltung, wobei die Anlaufschaltung einen Widerstand umfasst, der einen der Versorgungsanschlüsse der Steuerschaltung an eine Eingangsspannung des Stromversorgungsgerätes koppelt Aufgabe des erfindungsgemäßen getakteten Stromversorgungsgerätes mit Anlaufschaltung ist es, gattungsgemäße Stromversorgungsgeräte mit Anlaufschaltung derart weiterzubilden, daß eine kostengünstigere Realisierung möglich ist.

Aufgabe des erfindungsgemäßen getakteten Stromversorgungsgerätes mit Anlaufschaltung ist es, gattungsgemäße Stromversorgungsgeräte mit Anlaufschaltung derart weiterzubilden, dass eine kostengünstigere Realisierung möglich ist.

Erfindungsgemäß wird das dadurch erreicht, daß ein Anlaufwiderstand vorgesehen ist, über den die Eingangsspannung im inaktiven Zustand der Steuervorrichtung eine Anlaufkapazität lädt und über den der Steuervorrichtung in ihrem aktiven Zustand ein von der Eingangsspannung abgeleiteter Steuerstrom zuführbar ist, der das getaktete Anlegen der Eingangsspannung steuert.

Weitere vorteilhafte Aus- und Weiterbildungen sind in Unteransprüchen gekennzeichnet.

Die Erfindung wird nachfolgend anhand der Figuren und einem Ausführungsbeispiel näher erläutert. Entsprechende Elemente sind mit gleichen Bezugszeichen versehen. Es zeigen:
- Figur 1: eine Eingangsschaltung eines getakteten Stromversorgungsgerätes mit einer herkömmlichen Anlaufschaltung und
- Figur 2: eine Eingangsschaltung eines getakteten Stromversorgungsgerätes mit einer erfindungsgemäßen Anlaufschaltung.

Die Schaltung gemäß Figur 2 weist wiederum auf eine Anlaufkapazität C1, eine Steuervorrichtung ST, einen Transistor LT, eine Hilfsdiode D1 und einen Transformator TR. Als Beispiel für den Transformator TR ist hier die Ausführung mit einer Hilfswicklung HW, einer Primärwicklung PW und einer Sekundärwicklung SW gewählt.

Im vorliegenden Ausführungsbeispiel gemäß Figur 2 ist eine Reihenschaltung aus einem Anlaufwiderstand R2 und einer Steuerkapazität C2 enthalten. Die Reihenschaltung R2, C2 ist zwischen erste Anschlüsse 1 geschaltet, an denen eine Eingangsspannung U_{E} liegt. Zwischen die ersten Anschlüsse 1 ist zudem eine Serienschaltung aus der Primärwicklung PW und der Drain-Source-Strecke des Transistors LT geschaltet. Eine Serienschaltung aus der Hilfswicklung HW und der Hilfsdiode D1 ist parallel zu Versorgungsanschlüssen 3 der Steuervorrichtung ST geschaltet. Die Anlaufkapazität C1 ist ebenfalls parallel zu den Versorgungsanschlüssen 3 der Steuervorrichtung ST geschaltet. Eine Klemme der Versorgungsanschlüsse 3 ist mit einer Klemme der ersten Anschlüsse 1 verbunden.
Die Steuervorrichtung ST ist mit dem Steuereingang des Transistors LT verbunden. Der gemeinsame Knotenpunkt 2 des Anlaufwiderstandes R2 und der Steuerkapazität C2 ist zum einen mit einem Eingang der Steuervorrichtung ST, zum anderen mit dem Anodenanschluß einer Schaltdiode D2 verbunden. Der Kathodenanschluß der Schaltdiode D2 ist über eine Klemme der Versorgungsanschlüsse 3 an den Kathodenanschluß der Hilfsdiode D1 angeschlossen. Die Steuervorrichtung ST weist eine Signalverarbeitungseinheit SG auf, die mit dem gemeinsamen Knotenpunkt 2 verbunden ist.

Die Steuervorrichtung ST enthält die Signalverarbeitungseinheit SG, die ein Signal zur Steuerung des Transistors LT ausgibt. Zum Beispiel kann der Transistor LT so angesteuert werden, daß der durch ihn fließende Strom einen bestimmten Wert nicht überschreitet. Um dies bewerkstelligen zu können, muß der Strom bestimmt werden. Dazu dient die Serienschaltung aus dem Anlaufwiderstand R2 und der Steuerkapazität C2, die zu der Serienschaltung aus der Primärwicklung PW und der Drain-Source-Strecke des Transistors LT parallel geschaltet ist.

Über der Steuerkapazität C2, also zwischen der einen Klemme der ersten Anschlüsse 1 und dem Knotenpunkt 2, liegt eine Steuerspannung U_{S} an. Sie dient als Maß für den Strom durch den Transistor LT und wird von der Signalverarbeitungseinheit SG als Eingangsgröße verarbeitet.

Die Steuervorrichtung ST kann zwei verschiedene Zustände annehmen. In einem inaktiven Zustand wird der Transistor LT nicht angesteuert. Während des aktiven Zustandes erfolgt eine Ansteuerung des Transistors LT.
Befindet sich die Steuervorrichtung im inaktiven Zustand, wird die Anlaufkapazität C1 von der Eingangsspannung U_{E} geladen. Der Ladestrom fließt dabei über eine andere Klemme der ersten Anschlüsse 1 durch den Anlaufwiderstand R2 zum gemeinsamen Knotenpunkt 2 und weiter über die Schaltdiode D2 und eine Klemme der Versorgungsanschlüsse 3 der Steuervorrichtung ST zum einen Anschluß der Anlaufkapazität C1. Der andere Anschluß der Anlaufkapazität C1 ist direkt mit der einen Klemme der ersten Anschlüsse 1 verbunden. Vorzugsweise wird die Signalverarbeitungseinheit SG so ausgelegt, daß ihr Eingang im inaktiven Zustand hochohmig ist, damit nur ein geringer Strom über die Signalverarbeitungseinheit SG im inaktiven Zustand der Steuervorrichtung ST abfließen kann.

Wechselt die Steuervorrichtung ST in den aktiven Zustand, liefert die Anlaufkapazität C1 über die Versorgungsanschlüsse 3 die notwendige Energie zum ersten Takten des Transistors LT. Die Hilfsdiode D1 verhindert, daß die Ladung der Anlaufkapazität C1 über die Hilfswicklung HW entladen wird.
Die Schaltdiode D2 sorgt dafür, daß ein Strom an den Versorgungsanschlüssen 3 nicht auf den Eingang der Signalverarbeitungseinheit SG fließt.

Bei der nächsten inaktiven Phase kann die Aufladung der Anlaufkapazität C1 über den oben beschriebenen Weg, der den Anlaufwiderstand R2 und die Schaltdiode D2 einschließt, erfolgen.

Die Steuervorrichtung ST kann neben der Signalverarbeitungseinheit SG noch andere Einheiten, zum Beispiel zur Ausgangsspannungsregelung, aufweisen.

## Patentansprüche

1. Getaktetes Stromversorgungsgerät mit Anlaufschaltung mit
- ersten Anschlüssen (1) zum Zuführen einer Eingangsspannung (U_{E}),
- einer Wandlerinduktivität (TR), die über einen Transistor (LT) an der Eingangsspannung (U_{E}) liegt,
- einer Steuervorrichtung (ST), die in einen aktiven und einen inaktiven Zustand überführbar ist, die während des aktiven Zustandes in Abhängigkeit einer von der Eingangsspannung (U_{E}) abgeleiteten Steuerspannung (U_{S}) den Transistor (LT) getaktet ansteuert und die Versorgungsanschlüsse (3) aufweist, an die eine vom Stromversorgungsgerät erzeugte Spannung (HW) zuführbar ist,
- einen Anlaufwiderstand (R2),
- eine Anlaufkapazität (C1),
**dadurch gekennzeichnet, daß**
- die Eingangsspannung (U_{E}) im inaktiven Zustand der Steuervorrichtung (ST) die Anlaufkapazität (C1) über den Anlaufwiderstand (R2) und eine Schaltdiode (D2) lädt und dass der Steuervorrichtung (ST) in ihrem aktiven Zustand über den Anlaufwiderstand (R2) die von der Eingangsspannung (U_{E}) abgeleitete Steuerspannung (U_{S}) zuführbar ist, wobei die Anlaufkapazität (C1) mit einer Klemme der ersten Anschlüsse (1) unmittelbar und mit einer weiteren Klemme der ersten Anschlüsse (1) über eine Reihenschaltung aus dem Anlaufwiderstand (R2) und der Schaltdiode (D2) verbunden ist.

2. Getaktetes Stromversorgungsgerät nach Anspruch 1,
**dadurch gekennzeichnet, daß** als Steuerspannung (Uₛ) die Spannung über einer Steuerkapazität (C2), die mit dem Anlaufwiderstand (R2) eine zwischen die ersten Anschlüsse (1) geschaltete Reihenschaltung bildet, vorgesehen ist.

3. Getaktetes Stromversorgungsgerät nach Anspruch 1 oder 2,
**dadurch gekennzeichnet, daß** die Steuervorrichtung (ST) Mittel zur Regelung der Spannung der Wandlerinduktivität (TR) einschließt.

4. Getaktetes Stromversorgungsgerät nach einem der Ansprüche 1 bis 3,
**dadurch gekennzeichnet, daß** die Steuervorrichtung (ST) Mittel zur Begrenzung des Stroms durch die Wandlerinduktivität (TR) einschließt.

5. Getaktetes Stromversorgungsgerät nach einem der Ansprüche 1 bis 4,
**dadurch gekennzeichnet, daß** die Steuervorrichtung (ST) als integrierte Schaltung ausgeführt ist und die Schaltdiode (D2) in der Schaltung integriert ist.

6. Getaktetes Stromversorgungsgerät nach einem der vorhergehenden Ansprüche,
**dadurch gekennzeichnet, daß** die Wandlerinduktivität (TR) eine primärseitige Hilfswicklung (HW) enthält.

## Claims

1. Pulsed power supply unit with a starting circuit, having
- first connections (1) for supplying an input voltage (U_{E}),
- a transformer inductance (TR), which is connected to the input voltage (U_{E}) via a transistor (LT),
- a control apparatus (ST), which can be changed to an active state and to an inactive state, drives the transistor (LT) in a pulsed manner during the active state as a function of a control voltage (U_{S}) which is derived from the input voltage (U_{E}), and which control apparatus (ST) has supply connections (3) to which a voltage (HW) which is produced by the power supply unit can be supplied,
- a starting resistor (R2),
- a starting capacitance (C1),
**characterized in that**
- when the control apparatus (ST) is in the inactive state, the input voltage (U_{E}) charges the starting capacitance (C1) via the starting resistor (R2) and a switching diode (D2), and **in that**, when the control apparatus (ST) is in its active state, it can be supplied via the starting resistor (R2) with the control voltage (U_{S}) which is derived from the input voltage (U_{E}), with the starting capacitance (C1) being connected directly to one terminal of the first connections (1), and being connected to a further terminal of the first connections (1) via a series circuit formed by the starting resistor (R2) and the switching diode (D2).

2. Pulsed power supply unit according to Claim 1,
**characterized in that** the voltage across a control capacitance (C2) which, together with the starting resistor (R2), forms a series circuit connected between the first connections (1), is provided as the control voltage (U_{S}).

3. Pulsed power supply unit according to Claim 1 or 2,
**characterized in that** the control apparatus (ST) includes means for regulating the voltage of the transformer inductance (TR).

4. Pulsed power supply unit according to one of Claims 1 to 3,
**characterized in that** the control apparatus (ST) includes means for limiting the current through the transformer inductance (TR).

5. Pulsed power supply unit according to one of Claims 1 to 4,
**characterized in that** the control apparatus (ST) is in the form of an integrated circuit, and the switching diode (D2) is integrated in the circuit.

6. Pulsed power supply unit according to one of the preceding claims,
**characterized in that** the transformer inductance (TR) includes an auxiliary winding (HW) on the primary side.

## Revendications

1. Appareil d'alimentation électrique à impulsions avec un circuit démarrage comprenant :
- des premières connexions (1) pour alimenter une tension d'entrée (U_{E}) ;
- une inductance de transducteur (TR) est appliquée à la tension d'entrée (U_{E}) par un transistor (LT) ;
- un dispositif de commande (ST) transférable dans un état actif et un état inactif, qui commande les impulsions du transistor (LT) pendant l'état actif, en fonction d'une tension de commande (U_{S}) dérivée par la tension d'entrée (U_{E}) et présente des prises d'alimentation (3)recevant une tension (HW) produite par l'appareil d'alimentation électrique ;
- une résistance de démarrage (R2) ;
- une capacité de démarrage (C1) ;
**caractérisé en ce que**
- la tension d'entrée (U_{E}) charge la capacité de démarrage (C1) par la résistance de démarrage (R2) et par une diode de commutation (D2) dans l'état inactif du dispositif de commande (ST), et le dispositif de commande (ST) est alimenté dans son état actif par la résistance de démarrage (R2) à la tension de commande (U_{S}) dérivée par la tension d'entrée (U_{E}), la capacité de démarrage (C1) étant reliée directement à une borne des premières connexions (1), et à une autre borne des premières connexions (1) par un montage en série de la résistance de démarrage (R2) et de la diode de commutation (D2).

2. Appareil d'alimentation électrique à impulsions selon la revendication 1,
**caractérisé en ce que**
la tension de commande (U_{S}) est la tension d'une capacité de commande (C2) qui forme, avec la résistance de démarrage (R2), un montage en série monté entre les premières connexions (1).

3. Appareil d'alimentation électrique à impulsions selon la revendication 1 ou 2,
**caractérisé en ce que**
le dispositif de commande (ST) renferme des moyens de réglage de la tension de l'inductance de transducteur (TR).

4. Appareil d'alimentation électrique à impulsions selon l'une des revendications 1 à 3,
**caractérisé en ce que**
le dispositif de commande (ST) renferme des moyens de limitation du courant par l'inductance de transducteur (TR).

5. Appareil d'alimentation électrique à impulsions selon l'une des revendications 1 à 4,
**caractérisé en ce que**
le dispositif de commande (ST) est réalisé comme un circuit intégré et la diode de commutation (D2) est intégrée dans le circuit.

6. Appareil d'alimentation électrique à impulsions selon l'une des revendications précédentes,
**caractérisé en ce que**
l'inductance de transducteur (TR) contient un enroulement auxiliaire primaire (HW).
